# EUROPÄISCHE PATENTSCHRIFT

(11) **EP 3 458 430 B1**
(45) Veröffentlichungstag und Bekanntmachung des Hinweises auf die Patenterteilung: **14.10.2020**
(21) Anmeldenummer: 17713280.0
(22) Anmeldetag: 23.03.2017
(51) Int. Cl.: C04B 35/10, C04B 35/101, C04B 35/443, C04B 35/626, C04B 35/64, C04B 35/66, F27D 1/00, C04B 35/653, C04B 35/80

(54) **ZUR ELASTIFIZIERUNG VON GROBKERAMISCHEN FEUERFESTERZEUGNISSEN GEEIGNETE FEUERFESTE SPINELLGRANULATE, VERFAHREN ZU IHRER HERSTELLUNG UND IHRE VERWENDUNG**
SPINELL GRANULES SUITABLE FOR THE ELASTICIZATION OF COARSE CERAMIC REFRACTORY MATERIALS, METHOD FOR THE PRODUCTION THEREOF AND THEIR USE
GRANULES SPINELLES ADAPTÉES À LA PLASTICISATION DES MATÉRIAUX RÉFRACTAIRES CERAMIQUES À GROS GRAINS, LEUR PROCÉDÉ DE PRODUCTION ET LEUR UTILISATION

(30) Priorität: 19.05.2016 DE 102016109258
(43) Veröffentlichungstag der Anmeldung: 27.03.2019
(73) Patentinhaber: Refratechnik Holding GmbH, 85737 Ismaning (DE)
(72) Erfinder: LIEVER, Heinrich, 37127 Dransfeld (DE); SCHULZE-BERGKAMEN, Hilmar, Auckland 2016 (NZ); VELLMER, Carsten, 37073 Göttingen (DE)
(74) Vertreter: Patent- und Rechtsanwälte Dr. Solf & Zapf
(86) Internationale Anmeldenummer: PCT/EP2017/056999
(87) Internationale Veröffentlichungsnummer: WO 2017/198378

(56) Entgegenhaltungen:
- EP-A2- 1 247 785
- CN-A- 101 973 771
- W. KWESTROO: "Spinel Phase in the System MgO-Fe2O3-Al2O3", J. INORG. NUCL. CHEM., Bd. 9, 1. Januar 1959 (1959-01-01), Seiten 65-70, XP009058974, NL in der Anmeldung erwähnt

## Beschreibung

Die Erfindung betrifft zur Elastifizierung von grobkeramischen, insbesondere basischen, feuerfesten Erzeugnissen geeignete feuerfeste Spinellelastifizierergranulate, ein Verfahren zu ihrer Herstellung und ihre Verwendung in Spinellelastifizierer haltigen, grobkeramischen, insbesondere basischen Feuerfesterzeugnissen.

Keramische Feuerfesterzeugnisse basieren auf feuerfesten Werkstoffen, z. B. auf basischen feuerfesten Werkstoffen. Feuerfeste basische Werkstoffe sind Werkstoffe, in denen die Summe der Oxide MgO und CaO deutlich überwiegt. Sie sind z. B. in den Tabellen 4.26 und 4.27 im "Taschenbuch Feuerfeste Werkstoffe, Gerald Routschka, Hartmut Wuthnow, Vulkan-Verlag, 5. Auflage" aufgelistet.

Elastifizierende Spinellgranulate - im Folgenden auch nur "Spinellelastifizierer" oder "Elastifizierer" genannt, die üblicherweise in Form von grobkörnigen Granulaten eingesetzt werden - in einem grobkeramischen, als sogenannte Hauptkomponente mindestens ein feuerfestes mineralisches Feuerfestwerkstoffgranulat aufweisenden, z. B. basischen, Feuerfesterzeugnis sind mit einem jeweils geeigneten Gehalt den Feuerfesterzeugnissen beigemengte, statistisch im Feuerfesterzeugnisgefüge verteilte, körnig vorliegende, eine im Vergleich zur Hauptkomponente andere mineralische Zusammensetzung aufweisende Feuerfestwerkstoffgranulate, die im Vergleich zur Hauptkomponente z. B. einen anderen thermischen Ausdehnungskoeffizienten aufweisen und die das Gefüge des Feuerfesterzeugnisses durch Herabsetzung des E- und G-Moduls elastifizieren bzw. die Sprödigkeit des Feuerfesterzeugnisses vermindern und dadurch, z. B. infolge Mikrorissbildung, die Temperaturwechselbeständigkeit bzw. die Temperaturschockbeständigkeit erhöhen. In der Regel bestimmen sie das physikalische bzw. mechanische und thermomechanische Verhalten eines z. B. basischen Feuerfesterzeugnisses, das als Hauptkomponente mindestens einen körnigen, z. B. basischen, feuerfesten mineralischen Werkstoff aufweist. Derartige Elastifizierer sind z.B. MA-Spinell, Hercynit, Galaxit, Pleonast aber auch Chromit, Pikrochromit. Sie werden z. B. im oben genannten Taschenbuch im Kapitel 4.2 im Zusammenhang mit verschiedenen, z. B. basischen grobkeramischen Feuerfesterzeugnissen beschrieben.

Übliche Körnungen von körnigen Spinellelastifizierergranulaten liegen bekanntlich hauptsächlich z. B. zwischen 0 und 4 mm, insbesondere zwischen 1 und 3 mm. Die Körnungen der Hauptkomponenten der Feuerfesterzeugnisse aus feuerfesten, z. B. basischen Werkstoffen liegen bekanntlich hauptsächlich z. B. zwischen 0 und 7 mm, insbesondere zwischen 0 und 4 mm. Der Begriff "körnig" wird im Folgenden grundsätzlich im Gegensatz zu den Begriffen Mehl oder Pulver bzw. mehlfein oder pulverfein verwendet, wobei unter Mehl oder Feinanteile oder feinteilig Körnungen unter 1 mm, insbesondere unter 0,1 mm verstanden werden soll. Hauptsächlich meint, dass jeder Elastifizierer untergeordnete Mehlanteile und Gröberes aufweisen kann. Aber auch jede Hauptkomponente kann Mehl- bzw. Pulveranteile bis z.B. 35 Gew.-%, insbesondere 20 Gew.-% und untergeordnet Gröberes enthalten. Denn es handelt sich um industriell erzeugte Produkte, die nur mit begrenzten Genauigkeiten erzeugbar sind.

Grobkeramische Feuerfesterzeugnisse sind hauptsächlich geformte und ungeformte keramisch gebrannte oder ungebrannte Erzeugnisse, die durch ein grobkeramisches Herstellungsverfahren unter Verwendung von Korngrößen der feuerfesten Komponenten z. B. bis 6 mm oder 8 mm oder 12 mm hergestellt sind (Taschenbuch, Seite 21/22).

Die feuerfeste Hauptkomponente - auch Resistor genannt - bzw. die feuerfesten Hauptkomponenten derartiger z. B. basischer Feuerfesterzeugnisse gewährleisten im Wesentlichen die gewünschte Feuerfestigkeit sowie mechanische bzw. physikalische und chemische Resistenz, während die Elastifizierer neben ihrer elastifizierenden Wirkung ebenfalls zumindest unterstützend die mechanischen und thermomechanischen Eigenschaften, aber auch ggf. die Korrosionsbeständigkeit sowie eine chemische Beständigkeit z. B. gegen Alkalien und Salze gewährleisten sollen. In der Regel überwiegt der Anteil der feuerfesten Hauptkomponente, d. h. er beträgt über 50 Masse-% im Feuerfesterzeugnis, so dass demgemäß der Gehalt an Elastifizierer in der Regel bei unter 50 Masse-% liegt.

Feuerfeste Elastifizierer - auch Mikrorissbilder genannt - werden für grobkeramische Feuerfesterzeugnisse z. B. in DE 35 27 789 C3, DE 44 03 869 C2, DE 101 17 026 B4 beschrieben. Es sind demnach feuerfeste Werkstoffe, die die Resistenz des Gefüges der feuerfesten, z. B. basischen Erzeugnisse gegen mechanische und thermomechanische Belastungen, insbesondere durch Herabsetzung des E-Moduls erhöhen und die Resistenz gegen chemische Angriffe, z. B. gegen Schlackenangriffe, sowie Salz- und Alkalienangriffe zumindest nicht verschlechtern. In der Regel sind Ursache für die Elastifizierung Gefügestörungen wie Verspannungen und/oder Mikrorisse, die dazu führen, dass von außen eingetragene Spannungen abgebaut werden können.

Bekannt ist, dass Aluminiumoxid enthaltende basische Feuerfesterzeugnisse für den Gebrauch z. B. in der Zement-, Kalk- oder Dolomitindustrie bei hohen Betriebstemperaturen um die 1.500 °C im Allgemeinen ausreichende mechanische sowie thermomechanische Eigenschaften besitzen. Diese Erzeugnisse werden gewöhnlich durch die Zugabe von Aluminiumoxid und/oder Magnesiumaluminat-Spinell (MA-Spinell) zu gebrannter Magnesia bzw. Schmelzmagnesia elastifiziert. Solcherart Feuerfesterzeugnisse auf der Basis von Magnesia erfordern niedrige Calciumoxid-Gehalte (CaO), was nur durch gut aufbereitete, teure Rohstoffe möglich ist. Im Beisein von Calciumoxid bilden Aluminiumoxid und MA-Spinell CaO-Al₂O₃-Schmelzen und beeinflussen damit die Sprödigkeit der keramischen Erzeugnisse negativ.

Zusätzlich entstehen in industriellen Ofenaggregaten, z. B. in Zementöfen, bei hohen Temperaturen Reaktionen zwischen Aluminiumoxid, in-situ-Spinell oder MA-Spinell und der CaO enthaltenden Zementklinkerschmelze Minerale, z. B. Mayenit (Ca₁₂Al₁₄O₃₃) und/oder Ye'elimit (Ca₄Al₆O₁₂(SO₄)), die zu einem vorzeitigen Verschleiß der Ofenauskleidung führen können. Darüber hinaus neigen dichte und niedrig-poröse Magnesiaspinell-Steine, die als elastifizierende Komponenten entweder gesinterte oder geschmolzene MA-Spinelle (Magnesiumaluminatspinelle) enthalten, nur wenig zur Ausbildung einer stabilen Ansatzschicht, die sich aus Zementklinkerschmelzen während des Betriebs auf der feuerfesten Auskleidung aufbaut und im Zementdrehrohrofen erwünscht ist.

Diese Nachteile haben dazu geführt, Hercynit (FeAl₂O₄) als Elastifizierer einzusetzen, und zwar in Feuerfesterzeugnissen für die Brennzonen in Zementdrehrohröfen, die aufgrund der Eisengehalte des Elastifizierers ein deutlich verbessertes Ansatzvermögen aufweisen und im Falle von synthetischem Hercynit (DE 44 03 869 C2) oder Eisenoxid-Aluminiumoxid-Granulat (DE 101 17 026 A1) der keramischen Versatzmasse des Feuerfesterzeugnisses zugegeben werden.

Variierende Redoxbedingungen, die z. B. in Öfen der Zement-, Dolomit-, Kalk und Magnesitindustrie auftreten, führen bei Hercynit enthaltenden Auskleidungssteinen allerdings zu einem nachteiligen Austausch von Aluminium- und Eisenionen bei hohen Temperaturen. Oberhalb von 800 °C kann eine komplette feste Lösung innerhalb des Stoff-Systems FeAl₂O₄ (Hercynit)-Fe₃O₄ (Magnetit) im Hercynitkristall stattfinden, wobei sich unterhalb von 800 °C ein Zweiphasensystem mit ausgeschiedenem Magnetit bildet, was eine unerwünschte chemische und physikalische Angreifbarkeit von Hercynit in Feuerfesterzeugnissen unter bestimmten Redoxbedingungen zur Folge hat.

Der Einsatz alternativer Brennstoffe und Rohstoffe in modernen Drehrohröfen z. B. der Zement-, Kalk-, Dolomit- oder Magnesitindustrie verursacht in deren Atmosphäre beträchtliche Konzentrationen von Alkalien und Salzen verschiedener Provenienz. Hercynit zersetzt sich bekanntlich bei typischen Betriebstemperaturen unter Sauerstoffzutritt und/oder Luftzutritt zu FeAlO₃ und Al₂O₃. Diese mehrphasigen Reaktionsprodukte reagieren mit alkalischen Verbindungen und Salzen zu weiteren Sekundärphasen, die wiederum zu einer Versprödung des Feuerfesterzeugnisses führen und dessen Einsatz limitieren.

Eine derartige Mehrphasigkeit entsteht aber auch bereits bei der Herstellung von Hercynit während des Sinterns oder Schmelzens, und zwar beim Abkühlen durch Oxidation. Nach dem Abkühlen liegt ein mehrphasiges Produkt mit Hercynit als Hauptphase vor und zudem sind sogenannte Nebenphasen vorhanden. Im Einsatz von Hercynit als Elastifizierer enthaltenden Feuerfesterzeugnissen, d. h. in situ z. B. in betriebenen Zementdrehrohröfen, wirken auch die herstellungsbedingten Nebenphasen wie die oben beschriebenen, bei Betriebstemperaturen aus Hercynit entstehenden Nebenphasen versprödend.

Zur Vermeidung der Oxidation ist gemäß CN 101 82 38 72 A vorgeschlagen worden, Hercynit monophasig herzustellen, indem das keramische Brennen in einer Stickstoffatmosphäre durchgeführt wird. Diese Maßnahme ist sehr aufwändig und kann zwar eine Monophase des Hercynits gewährleisten, diese ist aber dennoch in situ instabil und weist mangelnde Beständigkeit unter oxidierenden Bedingungen in einem Ofenaggregat auf.

Die Erfindung nach DE 101 17 026 B4 beschreibt eine Alternative zum Hercynit, indem als Elastifizierer ein synthetischer Feuerfestwerkstoff vom Typ pleonastischer Spinell mit der Mischkristallzusammensetzung (Mg²⁺, Fe²⁺) (Al³⁺, Fe³⁺)₂O₄ und MgO-Gehalten von 20 bis 60 Gew.-% vorgeschlagen wird. In der Literatur wird der kontinuierliche Austausch von Mg²⁺- und Fe²⁺-Ionen beim Übergang vom Spinell sensu stricto (ss) MgAl₂O₄ bis hin zum Hercynit (FeAl₂O₄) beschrieben, wobei Mitglieder dieser Reihe mit Mg²⁺/Fe²⁺-Verhältnissen von 1 bis 3 als Pleonast bezeichnet werden (Deer et al., 1985 Introduction to the rock forming minerals). Verglichen mit Sinter- oder Schmelzhercynit zeigen diese Elastifizierer eine verbesserte Alkali- bzw. Klinkerschmelzen-Resistenz (Klischat et al., 2013, Smart refractory solution for stress-loaded rotary kilns, ZKG 66, Seite 54-60).

Im Falle des aus der Schmelze resultierenden Pleonasts oder pleonastischen Spinells mit 20-60 Gew.-% MgO sind z. B. die drei Mineralphasen MgFe₂O₄ss, MgAl₂O₄ und Periklas präsent. Die Existenz dieser Mineralphasen resultiert aus einem Energie intensiven Herstellungsprozess aus Komponenten aus dem ternären Stoffsystem MgO-Fe₂O₃-Al₂O₃ mit störenden Nebenphasen. Das Sintern bzw. Schmelzen in einem Schmelzaggregat, z. B. in einem elektrischen Lichtbogenofen, führt zu beträchtlichen Mengen an Nebenphasen wie gelöstem FeO in MgO (MgOss, Magnesiowüstit) und resultiert in einem komplexen Gemisch aus mehreren Mineralphasen.

DE 101 17 026 B4 beschreibt, dass der Elastizitätmodul (E-Modul) untersuchter feuerfester Steine mit steigenden MgO-Gehalten des in ihnen eingesetzten pleonastischen Spinells direkt proportional ist. Die Erhöhung von 20 auf 50 Gew.-% MgO in den Beispielen lässt den E-Modul von 25,1 auf 28,6 GPa ansteigen. Die hierbei gewählten Mengen an pleonastischem Spinell bedingen in vielen Fällen gleichzeitig die Präsenz von Mineralphasen wie Periklas (MgO), Magnesiowüstit (MgO ss) und Magnesioferrit (MgFe₂O₃), die als inhärente Bestandteile den Längenausdehnungskoeffizienten des Spinells beeinflussen und sich nachteilig auf die Sprödigkeit des den Spinell enthaltenden feuerfesten Erzeugnisses auswirken können.

Bei Glühverlustbestimmung gemäß DIN EN ISO 26845:2008-06 bei 1.025°C weisen Hercynit und Pleonast einen Glühgewinn von bis zu 4 % bzw. bis zu 2 % auf. Unter oxidierenden Bedingungen und entsprechenden Temperaturen zerfällt das Kristallgitter des Hercynits. Beim Pleonast wird der Magnesiowüstit in Magnesioferrit überführt.

Aufgabe der Erfindung ist, ein niedrigeres Oxidationspotential aufweisende bzw. oxidationsbeständigere, insbesondere in basischen Feuerfesterzeugnissen besser und dauerhafter elastifizierend wirkende Spinellelastifizierer zu schaffen, die vorzugsweise neben der guten Elastifizierung auch eine gute thermochemische und thermomechanische Resistenz und eine gleiche Elastifizierung bei im Vergleich z. B. zu Hercynit- oder Pleonastgehalten relativ geringeren Gehalten in insbesondere basischen Feuerfesterzeugnissen gewährleisten, insbesondere im Falle der Verwendung der sie enthaltenen Feuerfesterzeugnisse in Zementdrehrohröfen, wobei sie dabei zudem eine gute Ansatzbildung bewirken sollen. Aufgabe der Erfindung ist auch, grobkeramische basische Feuerfesterzeugnisse und Verwendungen dafür zu schaffen, die durch einen Gehalt mindestens eines Elastifizierergranulats des erfindungsgemäßen Typs den bekannten grobkeramischen, insbesondere basischen Feuerfesterzeugnissen hinsichtlich Oxidationsbeständigkeit sowie thermochemischer und thermomechanischer Resistenz und Ansatzbildung in situ überlegen sind.

Diese Aufgaben werden durch die Merkmale der Ansprüche 1, 7 und 12 gelöst. Vorteilhafte Weiterbildungen der Erfindung werden in den von diesen Ansprüchen abhängigen Unteransprüchen charakterisiert.

Die Erfindung betrifft durch ein Schmelzverfahren in neutraler oder reduzierender Atmosphäre hergestellte Spinellelastifizierergranulate mit erfindungsgemäß ausgewählten Zusammensetzungen der Spinelle im Dreistoffsystem MgO-Fe₂O₃-Al₂O₃. Aus dem Schmelzprozess resultieren neben der jeweiligen Hauptspinellmischkristallphase Mineralnebenphasen wie z. B. Magnesiowüstit und Magnesioferrit. Der Schmelzprozess erzeugt somit ein mehrphasiges mineralisches Schmelzprodukt, das nach dem Abkühlen einem Zerkleinerungs- und Fraktionierungsprozess unterzogen wird. Das auf diese Weise gewonnene Granulat kann als elastifizierender feuerfester Werkstoff feuerfesten Erzeugnissen beigegeben werden. Werden diese Erzeugnisse z. B. als feuerfeste Auskleidung in einem großvolumigen Industrieofen verwendet, dann wirken sie in situ bei hohen Anwendungstemperaturen (z. B. über 1.000 °C) - in an sich bekannter Weise - elastifizierend.

In neutraler oder reduzierender Ofenatmosphäre wirken dabei die Mineralphasen des Schmelzprodukts elastifizierend. Besonders vorteilhaft aber ist die Verwendung der Granulate aus den mehrphasigen Schmelzprodukten in feuerfesten Erzeugnissen, die in situ einer oxidierenden Atmosphäre ausgesetzt werden. Denn dabei bildet sich aus dem jeweiligen mehrphasigen Schmelzprodukt durch Hochtemperaturoxidation in situ eine SpinellMonophase aus, die in situ resistent ist und somit in einem, einer oxidierenden Atmosphäre ausgesetzten, mindestens einen erfindungsgemäßen SpinellElastifizierer z. B. in Form eines Granulats enthaltenden grobkeramischen, insbesondere basischen Feuerfesterzeugnis stabil bleibt und dessen Elastifizierung gewährleistet sowie auch dessen thermochemische und thermomechanische Beständigkeit unterstützt. Außerdem führt die Spinellmonophase zu einer sehr guten Ansatzbildung in einem Zementdrehrohrofen.

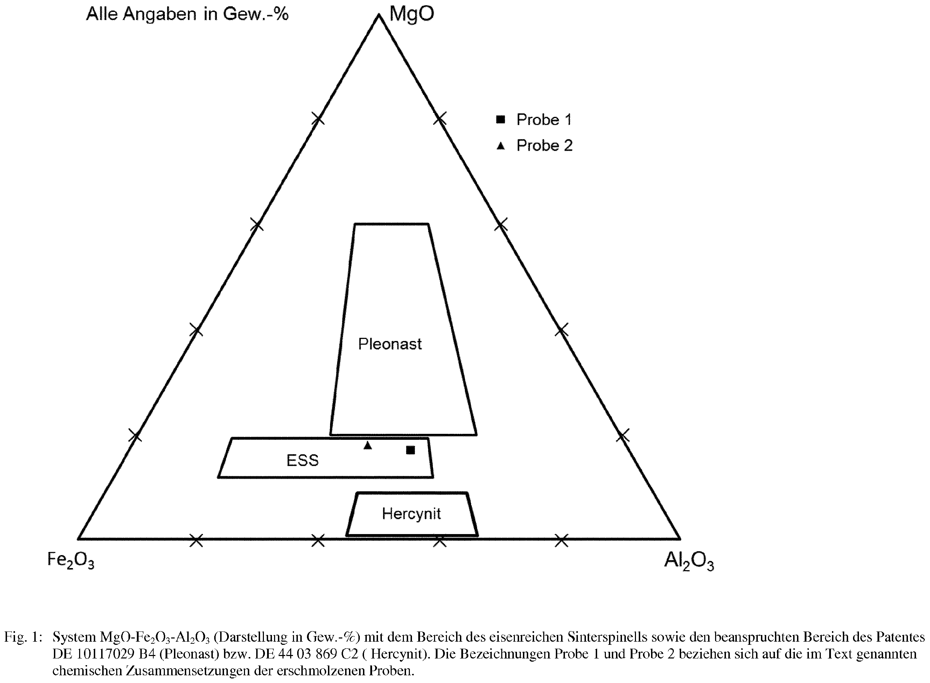

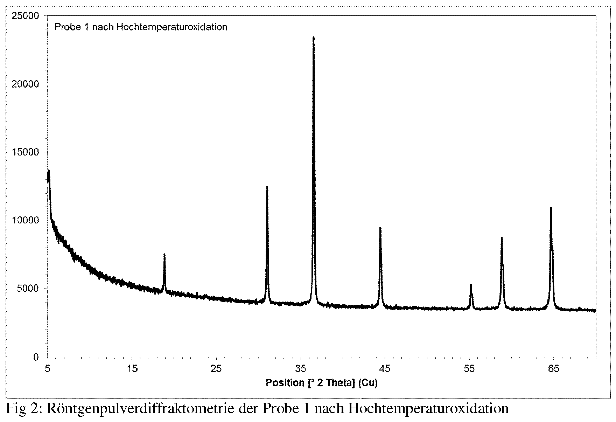

Dass im Dreistoffsystem MgO-Fe₂O₃-Al₂O₃ ein Bereich mit Spinellmonophasen in Form von komplexen ternären Mischkristallen existiert, ist von W. Kwestroo, in J. Inorg. Nucl. Chem., 1959, Vol. 9, Seite 65 bis 70, anhand von Laborversuchen beschrieben worden. Demnach wurde gemäß Fig. 1 und 2 a.a.O. ein relativ großer Molgewichtsbereich bei in Luft bei den Brenntemperaturen 1.250 und 1.400 °C gebrannten und gemahlenen und röntgenographisch analysierten Proben festgestellt, in dem stabile Spinellmonophasen unterschiedlicher Zusammensetzung existieren. Es wurde dabei ermittelt, dass die magnetische Sättigung oder die Curie-Temperatur der jeweiligen Monophase eine Funktion deren chemischer Zusammensetzung sein können. Weitere Eigenschaften der Monophasen wurden nicht untersucht oder angegeben. Die Monophasen wiesen unterschiedliche Mengen von (AI, Fe)₂O₃ in fester Lösung im Spinellkristall auf.

Im Rahmen der Erfindung konnte im Dreistoffsystem MgO-Fe₂O₃-Al₂O₃ ein engbegrenztes Zusammensetzungsfeld monophasiger stabiler Mischkristallspinelle im bekannten weiten Bereichsfeld der Spinellmonophasen aufgefunden werden mit als Elastifizierer geeigneten monophasigen Sinterspinell-Mischkristallen der folgenden Zusammensetzung gemäß Bereichsfeld Fig. 1:

| | |
|---|---|
| MgO: | 12 bis 19,5, insbesondere 15 bis 17 Gew.-% |
| Rest: | Fe₂O₃ und Al₂O₃ im Mengenverhältnisbereich Fe₂O₃ zu Al₂O₃ zwischen 80 zu 20 und 40 zu 60 Gew.-%. |

Das Feld des erfindungsgemäßen ESS ergibt sich wie folgt: Der minimale und maximale MgO-Gehalt wurde im Rahmen der Erfindung mit 12 Gew.-% bzw. 19.5 Gew.-% festgestellt. Die seitlichen Begrenzungen des ESS-Feldes sind jeweils Linien konstanter Fe₂O₃/Al₂O₃ Verhältnisse (Gew.-%).
Linke Begrenzung: Fe₂O₃/Al₂O₃ = 80/20
Rechte Begrenzung: Fe₂O₃/Al₂O₃ = 40/60

Graphisch stellen diese Begrenzungen ein Teilstück der Verbindungslinie von der Spitze des Dreiecks (MgO) zur Basis des Dreiecks dar. Die oben genannten Verhältnisse sind die Koordinaten der Punkte der Basis des Dreiecks.

Ausgehend vom MgO-Gehalt zwischen 12 und 19,5 Gew.-% enthalten die Mischkristalle jeweils einen Fe₂O₃ und Al₂O₃-Gehalt in fester Lösung aus den dafür jeweils angegebenen begrenzten Bereichen derart, dass sich eine Gesamtzusammensetzung zu 100 Gew.-% errechnet. Die Zusammensetzungen liegen somit bezüglich MgO immer im Spinellfeldbereich des Dreistoffsystems zwischen 12 und 19,5 Gew.-% MgO.

Besonders geeignet als Elastifizierer sind Spinelle aus dem erfindungsgemäßen Zusammensetzungsfeldbereich, die in körniger Form Kornrohdichten von mindestens 3,5, insbesondere von mindestens 3,6, vorzugsweise mindestens 3,8 g/cm³, insbesondere bis 4,0 g/cm³, ganz besonders bis 4,2 g/cm³, gemessen nach DIN EN 993-18, aufweisen. Diese Elastifizierer elastifizieren insbesondere damit versetzte grobkeramische basische Feuerfesterzeugnisse optimal.

Monophasig im Sinne der Erfindung meint, dass in den erfindungsgemäßen technischen hergestellten Spinellmischkristallen keine, allenfalls aber weniger als 5, insbesondere weniger als 2 Gew.-% Nebenphasen, z. B. aus Verunreinigungen der Ausgangsmaterialien stammend, vorliegen.

Vorteilhaft ist, wenn die Korndruckfestigkeiten der Körner des Elastifizierergranulats zwischen 30 MPa und 50 MPa, insbesondere zwischen 35 MPa und 45 MPa liegen (gemessen nach DIN EN 13055 - Anhang C). Die erfindungsgemäßen körnigen Spinellelastifizierer werden vorzugsweise mit folgenden Kornverteilungen hergestellt und verwendet (Ermittlung durch Siebung):
0,5-1,0 mm 30-40 Gew.-%
1,0-2,0 mm 50-60 Gew.-%,
dabei können jeweils auch bis 5 Gew.-% Körnungen kleiner 0,5 mm und größer 2 mm vorliegen, die die anderen Körnungen mengenmäßig entsprechend verringern.

Die Körnungen werden mit normalen, üblichen Kornverteilungen, insbesondere Gauß'schen Kornverteilungen, oder mit bestimmten üblichen Kornfraktionen, in denen bestimmte Kornfraktionen fehlen (Ausfallkörnung), verwendet, wie es gängige Praxis ist.

Die erfindungsgemäßen monophasigen Spinellelastifizierer sind mit Hilfe der Röntgendiffraktometrie eindeutig als ausschließlich monophasig vorhanden identifizierbar, wie weiter unten dargestellt wird.

Außerdem sind die Spinellmonophasen als ausschließlich vorhanden in lichtmikroskopischen Aufnahmen analysierbar und quantitativ ist die Zusammensetzung der Mischkristalle bzw. Monophasen mit einer Röntgenfluoreszenz-Elementaranalyse bestimmbar, z.B. mit einem Röntgenfluoreszenzspektrometer z. B. mit vom Typ Bruker S8 Tiger.

Fig. 1 zeigt im ternären Dreistoffsystem MgO-Fe₂O₃-Al₂O₃ in Gew.-% den erfindungsgemäß aufgefundenen Zusammensetzungsfeldbereich der als Elastifizierer geeigneten monophasigen Spinellmischkristalle als ESS begrenztes Viereck, während das Zusammensetzungsfeld der bekannten pleonastischen Spinellelastifizierer als Pleonast begrenztes Rechteck eingezeichnet ist. Außerdem ist auf der Zusammensetzungslinie Fe₂O₃-Al₂O₃ des Dreistoffsystems die typische Spinellelastifiziererzusammensetzung des üblicherweise verwendeten Hercynits als Hercynit begrenztes Rechteck gekennzeichnet.

Die Erfindung betrifft somit eisenreiche Spinelle, die innerhalb des ternären Systems MgO-Fe₂O₃-Al₂O₃ liegen und weder den Spinellen der Hercynit- noch denen der Pleonast-Gruppe zuzuordnen sind. Nach dem Schmelzen entsprechender hochreiner Rohstoff- bzw. Ausgangsmaterialien und anschließender Hochtemperaturoxidation besteht das jeweilige Spinellprodukt lediglich aus einer synthetischen Mineralmonophase und weist aufgrund der überwiegenden Existenz von dreiwertigem Eisen (Fe³⁺) kein oder kaum Oxidationspotential auf. Reaktive Nebenphasen wie sie z. B. häufig bei pleonastischen oder hercynitischen Spinelltypen vorhanden sind, sind nicht bzw. röntgenographisch nicht erkennbar vorhanden und können bei den erfindungsgemäßen Spinellprodukten die Leistungsfähigkeit von Feuerfesterzeugnissen, die die erfindungsgemäßen Spinellprodukte enthalten, nicht beeinträchtigen.

Werden erfindungsgemäße Spinelle als elastifizierende Komponente selbst bei geringerer Einwaage in geformten und ungeformten, insbesondere basischen Feuerfestmaterialien, z. B. für Ofenaggregate der Zement- und Kalkindustrie oder Dolomitindustrie oder Magnesitindustrie, eingesetzt, entstehen unter Anwendung üblicher Produktionsmethoden keramische Feuerfesterzeugnisse mit hoher Korrosionsresistenz gegenüber in der Ofenatmosphäre auftretenden Alkalien und Salzen. Außerdem besitzen diese Feuerfesterzeugnisse hervorragende thermochemische und thermomechanische Eigenschaften sowie eine starke Neigung zur Ansatzbildung in den genannten industriellen Ofenaggregaten bei hohen Temperaturen, wobei letztere Eigenschaften wohl auf relativ hohe oberflächennahe Eisenoxidgehalte des Feuerfestprodukts zurückzuführen sind.

Erfindungsgemäße als Elastifizierer verwendbare Spinellgranulate liegen in einem begrenzten ternären System, das alle Vorteile der chemischen Resistenz, der Ansatzfreudigkeit, der Elastifizierung und auch einer guten Energiebilanz durch ein ökonomisches Herstellungsverfahren für das Feuerfestmaterial einbringt. Die Erfindung schließt somit eine Lücke zwischen Hercynit- und Pleonastspinellelastifizierern, ohne die Nachteile des einen oder des anderen befürchten zu müssen.

Die erfindungsgemäß in Granulatform verwendeten während des keramischen Brandes oder in situ zu Monophasen aus den Schmelzprodukten umgewandelten Spinelle aus dem ternären Stoffsystem MgO-Fe₂O₃-Al₂O₃ unterscheiden sich im Wesentlichen von den pleonastischen Spinellen durch die Valenz der Kationen und durch niedrigere MgO-Gehalte. Ein Magnesiumüberschuss, der nur im Hochtemperaturbereich auftritt, zeigt sich im ternären System vom erfindungsgemäß verwendeten eisenreichen Spinell nicht, sondern letzterer besteht nach der Hochtemperaturoxidation nur aus einer mineralischen Monophase aufgrund des Fehlens von Nebenphasen wie z. B. Magnesioferrit, Magnesiowüstit. Die erfindungsgemäß verwendeten monophasigen Spinelle sind den pleonastischen Spinellen deshalb überlegen, weil die genannten Nebenphasen fehlen, die Längenausdehnungskoeffizienten besitzen, die nahe denen von Magnesia liegen und damit nur eine geringe elastifizierende Wirkung haben.

Ökologisch und ökonomisch vorteilhaft ist, dass sich die erfindungsgemäß verwendeten Spinelle durch ein einfaches Verfahren herstellen lassen, das nach Aufbereitung von drei Rohstoffkomponenten einen Schmelzprozess vorsieht. Im Rahmen der Erfindung wurde gefunden, dass sich z. B. aus einem Gemisch von Sintermagnesia, natürlich vorkommendem Eisenoxid und/oder Walzenzunder sowie Aluminiumoxid nach dem Schmelzen, Abkühlen, Brechen und Fraktionieren und der Einwirkung einer oxidierenden Atmosphäre bei hohen Temperaturen in situ eine mineralische Monophase bildet, wobei kaustische Magnesia, Schmelzmagnesia und metallurgischer Bauxit ebenfalls als Ausgangsstoffe verwendet werden können.

Die strukturelle Eigenheit der erfindungsgemäß als Granulat verwendeten Spinelle ermöglicht, Oxide wie Al₂O₃ bzw. Fe₂O₃ in fester Lösung im Kristall aufzunehmen, deren Endglieder durch γ-Al₂O₃ bzw. γ-Fe₂O₃ repräsentiert werden. Dieser Umstand erlaubt die Herstellung der mineralischen Monophase im ternären Dreistoffsystem MgO-Fe₂O₃-Al₂O₃, deren elektrische Neutralität durch Kationen-Fehlstellen im Spinell-Kristallgitter gewährleistet wird.

Im Allgemeinen führt die Differenz von Längenausdehnungskoeffizienten α zweier oder mehrerer Komponenten in einem keramischen Feuerfesterzeugnis bei dessen Abkühlung nach einem Sintervorgang zur Ausbildung von Mikrorissen hauptsächlich entlang der Korngrenzen und erhöht damit dessen Duktilität bzw. verringert die Sprödigkeit. Die Mischung, Formgebung und das Sintern von gebrannter Magnesia im Gemisch mit erfindungsgemäßen Spinellgranulaten unter Anwendung üblicher Produktionsmethoden führt zu basischen Feuerfestmaterialien mit reduzierter Sprödigkeit, hoher Duktilität und hervorragender Alkaliresistenz, die besonders basischen Erzeugnissen überlegen ist, die Sinter- oder Schmelzhercynit oder Sinter- oder Schmelzpleonast als Elastifiziererkomponente enthalten. Im Kontakt mit Zementklinkerschmelzphasen im Zementofen bedingt die eisenreiche Oberfläche erfindungsgemäßer, erfindungsgemäßes Spinellgranulat enthaltender Feuerfesterzeugnisse die Ausbildung des bei 1.395 °C schmelzenden Brownmillerit, das zu einer sehr guten Ansatzbildung und damit zu einem sehr guten Schutz des Feuerfestmaterials gegen thermomechanische Beanspruchung durch das Brenngut im Ofen beiträgt.

Im Folgenden wird die Herstellung des erfindungsgemäß als Elastifizierer verwendeten Spinells beispielhaft beschrieben. Es handelt sich wie bereits oben erläutert, um einen eisenreichen Spinell aus dem Zusammensetzungsfeld ESS gemäß Fig. 1 im Dreistoffsystem MgO-Fe₂O₃-Al₂O₃ (im Folgenden wird der Spinell auch nur ESS genannt).

Ausgangsmaterialien sind mindestens eine Magnesiakomponente, mindestens eine Eisenoxidkomponente und mindestens eine Aluminiumoxidkomponente.

Die Magnesiakomponente ist insbesondere eine hochreine MgO-Komponente und insbesondere Schmelzmagnesia und/oder Sintermagnesia und/oder kaustische Magnesia.

Der MgO-Gehalt der Magnesiakomponente liegt insbesondere über 96, vorzugsweise über 98 Gew.-%.

Die Eisenoxidkomponente ist insbesondere eine hochreine Fe₂O₃-Komponente und insbesondere natürlicher oder aufbereiteter Magnetit und/oder Hämatit und/oder Walzenzunder, ein Nebenprodukt aus der Eisen- und Stahlproduktion.

Der Fe₂O₃-Gehalt der Eisenoxidkomponente liegt insbesondere über 90, vorzugsweise über 95 Gew.-%.

Die Aluminiumoxidkomponente ist insbesondere eine hochreine Al₂O₃-Komponente und insbesondere alpha und/oder gamma Alumina.

Der Al₂O₃-Gehalt der Aluminiumkomponente liegt insbesondere über 98, vorzugsweise über 99 Gew.-%.

Diese Ausgangsmaterialien weisen vorzugsweise Mehlfeinheit auf mit Korngrößen ≤ 1, insbesondere ≤ 0,5 mm. Sie werden innig gemischt bis eine homogene bis nahezu homogene Verteilung der Ausgangsmaterialien in der Mischung vorliegt.

Die für die Schmelzreaktion optimale Mehlfeinheit und Mischung der Ausgangsmaterialien kann aber auch vorteilhafterweise im Mahlaggregat durch Mahlung erzeugt werden, indem mindestens ein körniges Ausgangsmaterial mit Korngrößen z. B. über 1, z. B. 1 bis 6 mm verwendet wird, das während der Mahlung mehlfein zerkleinert wird.

Die Mischung der Ausgangsmaterialien wird anschließend z. B. in neutraler oder reduzierender Atmosphäre im Lichtbogenofen in einem kontinuierlichen oder diskontinuierlichen Prozess bis zum Erreichen der Schmelze behandelt, wobei ein Festkörper gebildet wird oder mehrere Festkörper gebildet werden. Danach wird abgekühlt und der Festkörper zerkleinert, z. B. mit Kegel- oder Walzenbrechern oder dgl. Zerkleinerungsaggregat, so dass als Elastifizierer verwendbare, gebrochene Granulate gebildet werden. Anschließend wird das zerkleinerte, körnige Material z. B. durch Siebung in bestimmte körnige Granulatfraktionen fraktioniert. Für das Schmelzen können Lichtbogenöfen verwendet werden.

Die Verdichtung der Mischung beschleunigt die Schmelzreaktionen und begünstigt einen geringen Nebenphasengehalt.

Nach dem Schmelzen und Abkühlung liegen mineralogisch betrachtet Spinellmischkristalle mit Fe₂O₃ und Al₂O₃ in fester Lösung und Nebenphasen vor, wobei das Eisen in den Mischkristallen sowohl zwei- als auch dreiwertig vorliegt. Aufgrund des Schmelzsyntheseverfahrens mit Mischungen aus dem erfindungsgemäßen Bereich liegen mehr als 50 Mol-% als zweiwertiges Eisen Fe²⁺ vor.

Im Folgenden wird die Erfindung beispielhaft näher erläutert.

Es wurden zwei Mischungen zusammengestellt wie folgt (Angaben in Gew.-%):

| | Mischung 1 | Mischung 2 |
|---|---|---|
| Sintermagnesia | 17 | 18 |
| Alumina | 45,5 | 38 |
| Eisenoxid (Magnetit) | 37,5 | 44 |

Diese Mischungen wurden in einem Lichtbogenofen bei 2.100 °C geschmolzen, wobei die hohe Temperatur zu einer Reduktion des Fe₂O₃ in der Rohstoffmischung führte.

Die erschmolzenen Proben 1 und 2 aus den Mischungen 1 und 2 wurden hinsichtlich der chemischen Zusammensetzung des Mineralbestandes (Röntgenpulverdiffraktometrie) und Mikrogefüge untersucht. Die folgende Tabelle 1 zeigt das Ergebnis.

**Tab 1: Chemische Zusammensetzung und Mineralbestand der im (Labor-)Lichtbogenofen erschmolzenen Proben (Probe 1, Probe 2). - = nicht nachgewiesen, ? = nicht eindeutig nachgewiesen, ± = Spur, + = nachgewiesen, ++ = deutliche Gehalte, ++++ = nachgewiesen als Hauptphase**

| | Probe 1 | Probe 2 |
|---|---|---|
| SiO₂ | 0.54 | 0.45 |
| Al₂O₃ | 45.90 | 38.61 |
| Fe₂O₃ | 35.83 | 42.21 |
| Cr₂O₃ | 0.01 | 0.02 |
| MnO | 0.03 | 0.04 |
| TiO₂ | 0.16 | 0.18 |
| V₂O₅ | 0.09 | 0.10 |
| P₂O₅ | 0.04 | 0.03 |
| CaO | 0.34 | 0.26 |
| MgO | 16.89 | 17.94 |
| K₂O | 0.00 | 0.00 |
| Na₂O | 0.06 | 0.02 |
| | | |
| Glühverlust | - | - |
| Glühgewinn | 1.64 | 1.91 |
| | | |
| Mineralbestand | | |
| Spinell S2¹⁾ | +++ | +++ |
| Spinell S1²⁾ | + | + |
| Wüstit | + | + |
| Periklas | ? | ± |

| | | |
|---|---|---|
| ¹⁾ Spinell S1 (MgFe₂O₄ss) ²⁾ Spinell S2 (MgAl₂O₄ss)) | | |

Das erschmolzene Material der Proben 1 und 2 weist einen signifikanten Glühgewinn (1 bis 2 Gew.-%) auf. Dies belegt, dass ein erheblicher Anteil des Eisens im Schmelzprodukt in der zweiwertigen Form (Fe²⁺) vorliegt. Das Vorhandensein von zweiwertigem Eisen (Fe²⁺) ist eine Folge der Reduktion der Eisenoxidkomponente (Fe³⁺ → Fe²⁺) beim Schmelzprozess im Lichtbogenofen.

Die Probe 1 wurde einer Hochtemperaturoxidation unterzogen. Das Röntgenpulverdiffraktogramm dieser Probe 1 zeigt Fig. 2.

Die Reflexe der Probe 1 haben eine geringe Halbwertsbreite. Die Positionen und die Intensitäten der Reflexe können durch eine einzige Spinellphase erklärt werden.

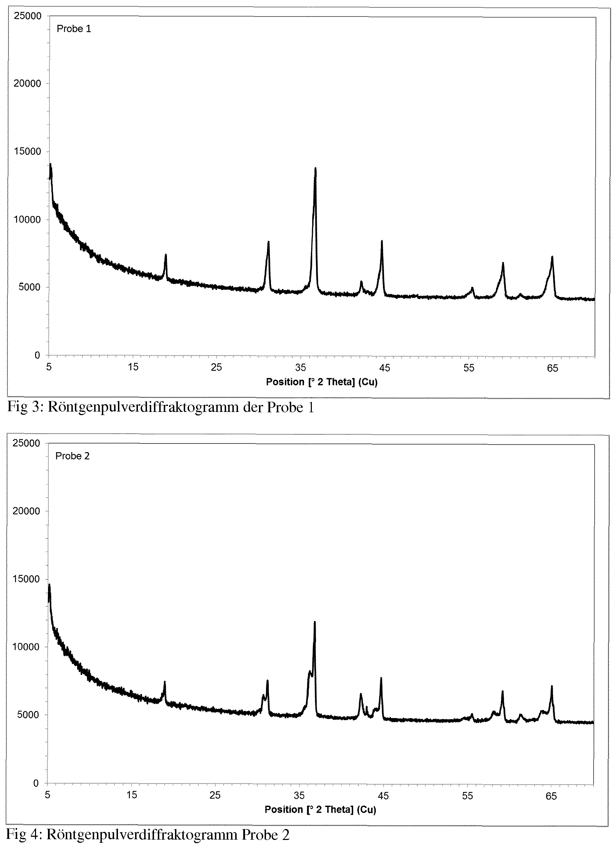

Die Fig. 3 und 4 dagegen zeigen Röntgenpulverdiffraktogramme der Probe 1 und 2 der nicht einer Hochtemperaturoxidation unterzogenen lediglich erschmolzenen Proben. Die Reflexe sind im Vergleich zum Röntgenpulverdiffraktogramm gemäß Fig. 2 weniger gut definiert und haben höhere Halbwertsbreiten. Die Positionen und die Intensitäten der Reflexe sind durch die Koexistenz von zwei Spinellphasen (Spinell S1 (MgFe₂O₄ₛₛ) bzw. Spinell S2 (MgAl₂O₄ₛₛ)) sowie Wüstit und Spuren von Periklas erklärbar.

Bei Verwendung von erschmolzenen Spinellgranulaten in feuerfesten Erzeugnissen als Elastifzierer wirken die Granulate in reduzierender Atmosphäre und zum Teil auch in neutraler Atmosphäre lediglich elastifizierend, während sie in situ bei hohen Temperaturen und dabei oxidierender Atmosphäre in eine jeweilige Monophase umwandeln, die eine hohe Oxidationsbeständigkeit, eine sehr gute Elastifizierung und eine sehr gute Korrosionsbeständigkeit sowie eine sehr gute Ansatzbildung in einem Zementdrehrohrofen gewährleistet.

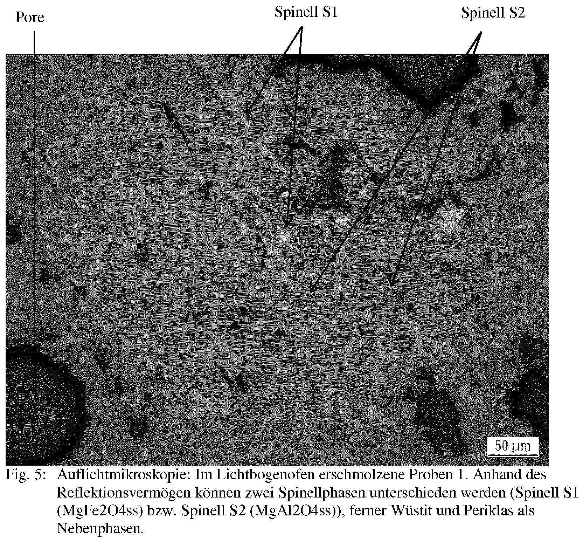

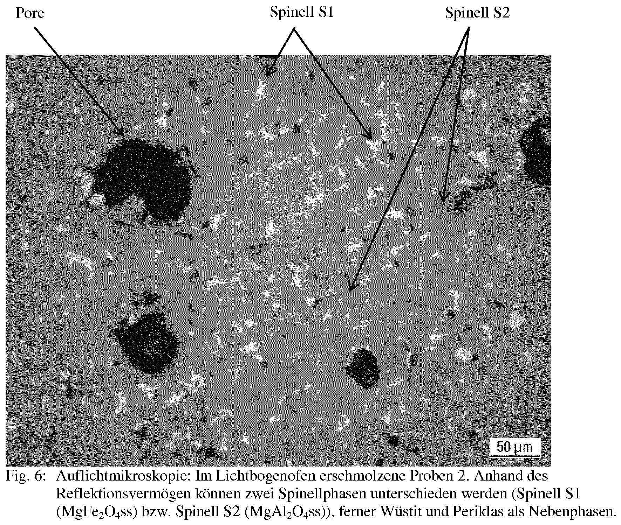

Die im Lichtbogenofen erschmolzenen Proben sind mehrphasig. Neben zwei Spinellphasen (Spinell S1 (MgFe₂O₄ₛₛ) bzw. Spinell 2 (MgAl₂O₄ₛₛ)) sind mittels Röntgenpulverdiffraktometrie Wüstit und Periklas nachweisbar. Auch die Mikrogefüge weisen die Schmelzprodukte als mehrphasig aus. Dies zeigen die Fig. 5 und 6. Es handelt sich um auflichtmikroskopische Bilder. Anhand des Reflektionsvermögens lassen sich verschiedene Phasen deutlich unterscheiden.

Unter reduzierenden Bedingungen während des Schmelzprozesses im Lichtbogenofen wird Fe³⁺ zu Fe²⁺ reduziert. Damit nimmt die Anzahl der zweiwertigen Kationen (Mg²⁺, Fe²⁺) zu. Schließlich ist das Verhältnis aus dreiwertigen Kationen (Al³⁺, Fe³⁺) und zweiwertigen Kationen nicht mehr ausreichend für das Spinellgitter - statt einer einzigen Phase entstehen zwei Spinellphasen und weitere Phasen (Wüstit, Periklas).

Unter den üblicherweise oxidierenden Brennbedingungen z. B. zur Herstellung von elastifizierenden Magnesiasteinen im Temperaturbereich von 1.400 °C bis 1.700 °C bildet sich in situ aus dem mehrphasigen Schmelzprodukt eine homogene Spinellphase.

Setzt man das Schmelzprodukt zur Herstellung von zu elastifizierenden z. B. Magnesiasteinen ein, stellt sich während des keramischen Brandes bzw. des Herstellungsbrandes eine elastifizierende Wirkung ein.

Das gleiche erfolgt in situ auch bei in ungebrannter Form in eine Ofenauskleidung eingebauten feuerfesten Erzeugnissen, die erfindungsgemäße Schmelzspinellgranulate als Elastifizierer aufweisen.

Die Erfindung betrifft auch basische feuerfeste Erzeugnisse, z. B. basische Feuerfestformkörper und basische Feuerfestmassen, die z. B. 50 bis 95 Gew.-%, insbesondere 60 bis 90 Gew.-% mindestens eines körnigen basischen feuerfesten Werkstoffs, insbesondere Magnesia, insbesondere Schmelzmagnesia und/oder Sintermagnesia mit Korngrößen z. B. zwischen 1 und 7, insbesondere zwischen 1 und 4 mm, sowie 5 bis 20 Gew.-%, insbesondere 6 bis 15 Gew.-% mindestens eines erfindungsgemäßen körnigen Elastifizierers mit Korngrößen z. B. zwischen 0,5 und 4, insbesondere zwischen 1 und 3 mm, aufweisen, wobei 0 bis 20 Gew.-%, insbesondere 2 bis 18 Gew.-% mindestens eines mehlförmigen basischen feuerfesten Werkstoffs, insbesondere Magnesia, insbesondere Schmelzmagnesia und/oder Sintermagnesia mit Korngrößen ≤ 1 mm, insbesondere ≤ 0,1 mm und 0 bis 5, insbesondere 1 bis 5 Gew.-% mindestens eines erfindungsgemäßen mehlförmigen Spinells als Zusatzstoff mit Korngrößen ≤ 1 mm, insbesondere ≤ 0,1 mm und 0 bis 5, insbesondere 1 bis 2 Gew.-% mindestens eines für feuerfeste Erzeugnisse bekannten Bindemittels, insbesondere mindestens eines organischen Bindemittels wie Ligninsulfonat, Dextrin, Methylcellulose enthalten sein können.

Die Erfindung wird insbesondere charakterisiert durch einen körnigen Elastifizierer in Form eines gebrochenen Granulats für Feuerfesterzeugnisse, insbesondere für basische Feuerfesterzeugnisse, mineralisch bestehend jeweils aus einem monophasigen geschmolzenen Mischkristallspinell des Dreistoffsystems MgO-Fe₂O₃-Al₂O₃ aus dem Zusammensetzungsbereich

| | |
|---|---|
| MgO: | 12 bis 19,5, insbesondere 15 bis 17 Gew.-% |
| Rest: | Fe₂O₃ und Al₂O₃ im Mengenverhältnisbereich Fe₂O₃ zu Al₂O₃ zwischen 80 zu 20 und 40 zu 60 Gew.-%. |

wobei ausgehend von einem MgO-Gehalt zwischen 12 bis 19,5 Gew.-% die jeweiligen Mischkristalle jeweils einen Fe₂O₃- und Al₂O₃-Gehalt in fester Lösung aus den dafür jeweils angegebenen begrenzten Bereichen derart enthalten, dass sich eine Gesamtzusammensetzung zu 100 Gew.-% ergibt.

Vorteilhaft ist ferner, wenn der Elastifizierer aufweist:
eine Kornrohdichte ≥ 3,5, insbesondere ≥ 3,6, vorzugsweise ≥ 3,7 g/cm³, ganz vorzugweise bis 3,8 g/cm³, gemessen 5 nach DIN EN 993-18
   oder
weniger als 15, insbesondere weniger als 10 Gew.-% Nebenphasen
   oder
Korndruckfestigkeiten zwischen 30 MPa und 50 MPa, insbesondere zwischen 35 MPa und 45 MPa, gemessen in Anlehnung an DIN EN13055 - Anhang C
   oder
lineare Ausdehnungskoeffizienten α zwischen 8,5 und 9,5, insbesondere zwischen 8,8 und 9,2 • 10⁻⁶ K⁻¹
   oder
Korngrößenverteilung zwischen 0 und 6, insbesondere zwischen 0 und 4 mm, vorzugsweise mit folgenden Kornverteilungen, jeweils mit normalen üblichen Kornverteilungen, insbesondere Gauß'schen Kornverteilungen, oder mit bestimmten ausgewählten Kornfraktionen bzw. Kornbändern.
   0,5-1,0 mm 30-40 Gew.-%
   1,0-2,0 mm 50-60 Gew.-%

Die Erfindung wird insbesondere auch charakterisiert durch ein Verfahren zur Herstellung eines monophasigen Sinterspinells, wobei
- mindestens eine hochreine, insbesondere mehlförmige MgO-Komponente
- mindestens eine hochreine, insbesondere mehlförmige Fe₂O₃-Komponente
- mindestens eine hochreine, insbesondere mehlförmige Al₂O₃-Komponente
in bestimmten, im Zusammensetzungsbereich nach Anspruch 1 liegenden, auf die Oxide bezogenen Mengen gemischt und die Mischung in neutraler oder reduzierender Atmosphäre in z. B. einem Lichtbogenofen geschmolzen werden, nach Abkühlung der Schmelze das Schmelzprodukt zu einem Granulat zerkleinert und klassifiziert wird und vorzugsweise anschließend das klassifizierte oder noch nicht klassifizierte Granulat einer Hochtemperaturoxidation, z.B. in situ als elastifizierender Bestandteil eines feuerfesten Erzeugnisses, in ein monophasiges Spinellprodukt überführt wird.

Vorteilhaft ist ferner, wenn die folgenden Verfahrensparameter verwendet werden:
- als MgO-Komponente mindestens ein Ausgangsmaterial aus der folgenden Gruppe verwendet wird: Sintermagnesia, kaustische Magnesia insbesondere mit MgO-Gehalten über 96, vorzugsweise über 98 Gew.-%
- als Fe₂O₃-Komponente mindestens ein Ausgangsmaterial aus der folgenden Gruppe verwendet wird: Hämatit oder Magnetit, insbesondere mit Fe₂O₃-Gehalten über 90, vorzugsweise über 95 Gew.-%
- als Al₂O₃-Komponente mindestens ein Ausgangsmaterial aus der folgenden Gruppe verwendet wird: alpha und/oder gamma Alumina, insbesondere mit Al₂O₃-Gehalten über 98, vorzugsweise über 99 Gew.-%, vorzugsweise alpha und gamma Alumina.

Anstelle der reinen üblicherweise verwendeten hochwertigen Primär-Rohstoffe können auch Granulate aus Recyclingmaterialien wie Walzenzunder (Fe₂O₃) oder recycelte Magnesiasteine (MgO) oder Magnesia-Spinellsteine (Al₂O₃, MgO) zumindest in Teilmengen verwendet werden.

Es ist weiterhin vorteilhaft, wenn die Komponenten mit Mahlenergie in einem Mahlaggregat zerkleinert und gemischt werden, vorzugsweise bis ≤ 1 mm.
oder
die Mischungen bei Temperaturen zwischen 1.750 und 2.200, insbesondere zwischen 1.800 und 2.100 °C geschmolzen werden
oder
die Mischungen vor dem Schmelzen z. B. durch Granulieren oder Pressen verdichtet werden.

Die Erfindung betrifft auch ein basisches, keramisch gebranntes oder ungebranntes Feuerfesterzeugnis in Form von Feuerfestformkörpern, insbesondere gepressten Feuerfestformkörpern oder ungeformten Feuerfestmassen aufweisend, insbesondere bestehend aus:
50 bis 95 Gew.-%, insbesondere 60 bis 90 Gew.-% mindestens eines körnigen, basischen, feuerfesten Werkstoffs, insbesondere Magnesia, insbesondere Schmelzmagnesia und/oder Sintermagnesia mit Korngrößen z. B. zwischen 1 und 7, insbesondere zwischen 1 und 4 mm
0 bis 20, insbesondere 2 bis 18 Gew.-% mindestens eines mehlförmigen, basischen, feuerfesten Werkstoffs, insbesondere Magnesia, insbesondere Schmelzmagnesia und/oder Sintermagnesia mit Korngrößen ≤ 1 mm, insbesondere ≤ 0,1 mm
5 bis 20, insbesondere 6 bis 15 Gew.-% mindestens eines erfindungsgemäßen körnigen Elastifizierergranulats mit Korngrößen z. B. zwischen 0,5 und 4, insbesondere zwischen 1 und 3 mm
0 bis 5, insbesondere 1 bis 5 Gew.-% mindestens eines mehlförmigen Zusatzstoffes, z. B. aus einem erfindungsgemäß hergestellten mehlförmigen Schmelzspinell mit Korngrößen ≤ 1 mm, insbesondere ≤ 0,1 mm
0 bis 5, insbesondere 1 bis 2 Gew.-% mindestens eines für Feuerfesterzeugnisse bekannten Bindemittels, insbesondere mit mindestens einem organischen Bindemittel wie Ligninsulfonat, Dextrin, Methylcellulose, etc.

Die erfindungsgemäßen, erfindungsgemäße Elastifizierergranulate enthaltenden Feuerfesterzeugnisse eignen sich insbesondere für die Verwendung als feuerseitige Auskleidung von industriellen großvolumigen Ofenaggregaten, die mit neutraler und/oder oxidierender Ofenatmosphäre betrieben werden, insbesondere für die Auskleidung von Zementdrehrohröfen.

## Patentansprüche

1. Körniges feuerfestes mineralisches Elastifizierergranulat für Feuerfesterzeugnisse, insbesondere für basische Feuerfesterzeugnisse, mineralisch bestehend jeweils aus einem monophasigen Schmelzspinellmischkristall oder mehrphasigen Schmelzprodukt des Dreistoffsystems MgO-Fe₂O₃-Al₂O₃ aus dem Zusammensetzungsbereich
MgO: 12 bis 19,5, insbesondere 15 bis 17 Gew.-%
Rest: Fe₂O₃ und Al₂O₃ im Mengenverhältnisbereich Fe₂O₃ zu Al₂O₃ zwischen 80 zu 20 und 40 zu 60 Gew.-%
wobei ausgehend von einem MgO-Gehalt zwischen 12 bis 19,5 Gew.-% die jeweiligen Mischkristalle jeweils einen Fe₂O₃- und Al₂O₃-Gehalt in fester Lösung aus den dafür jeweils angegebenen begrenzten Bereichen derart enthalten, dass sich eine Gesamtzusammensetzung zu 100 % ergibt.

2. Elastifizierergranulat nach Anspruch 1,
aufweisend eine Rohdichte ≥ 3,5, insbesondere ≥ 3,6, vorzugsweise ≥ 3,7 g/cm³, ganz besonders bis 3,8 g/cm³, gemessen nach DIN EN 993-18.

3. Elastifizierergranulat nach Anspruch 1 und/oder 2,
aufweisend weniger als 15, insbesondere weniger als 10 Gew.-% Nebenphasen.

4. Elastifizierergranulat nach einem oder mehreren der Ansprüche 1 bis 3, aufweisend Korndruckfestigkeiten zwischen 30 MPa und 50 MPa, insbesondere zwischen 35 MPa und 45 MPa, gemessen in Anlehnung an DIN EN 13055 (Anhang C).

5. Elastifizierergranulat nach einem oder mehreren der Ansprüche 1 bis 4, aufweisend einen linearen Ausdehnungskoeffizienten zwischen 8.5 und 9.5, insbesondere zwischen 8.8 und 9.2 • 10⁻⁶ K⁻¹.

6. Elastifizierergranulat nach einem oder mehreren der Ansprüche 1 bis 5, aufweisend Korngrößen mit normalen üblichen Kornverteilungen, insbesondere Gauß'schen Kornverteilungen, oder mit bestimmten Kornfraktionen zwischen 0 und 6, insbesondere zwischen 0 und 4 mm, vorzugsweise mit folgenden Kornverteilungen:
0.5-1.0 mm 30-40 Gew.-%
1.0-2.0 mm 50-60 Gew.-%.

7. Verfahren zur Herstellung eines monophasigen Elastifizierergranulats nach einem oder mehreren der Ansprüche 1 bis 6,
wobei
- mindestens eine hochreine, insbesondere mehlförmige MgO-Komponente
- mindestens eine hochreine, insbesondere mehlförmige Fe₂O₃-Komponente
- mindestens eine hochreine, insbesondere mehlförmige Al₂O₃-Komponente
in bestimmten, im Zusammensetzungsbereich nach Anspruch 1 liegenden, auf die Oxide bezogenen Mengen gemischt und die Mischung in neutraler oder reduzierender Atmosphäre z. B. in einem Lichtbogenofen geschmolzen werden, nach Abkühlung der Schmelze das Schmelzprodukt zu einem Granulat zerkleinert und klassifiziert wird und vorzugsweise anschließend das klassifizierte oder noch nicht klassifizierte Granulat einer Hochtemperaturoxidation, z. B. in situ als elastifizierender Bestandteil eines feuerfesten Erzeugnisses, in ein monophasiges Spinellprodukt überführt wird.

8. Verfahren nach Anspruch 7,
wobei
- als MgO-Komponente mindestens ein Rohstoffmaterial aus der folgenden Gruppe verwendet wird: Schmelzmagnesia, Sintermagnesia, kaustische Magnesia, insbesondere mit MgO-Gehalten über 96, vorzugsweise über 98 Gew.-%, oder eine eisenreiche, alpine Sintermagnesia
- als Fe₂O₃-Komponente mindestens ein Rohstoffmaterial aus der folgenden Gruppe verwendet wird: Magnetit, Hämatit, Walzenzunder insbesondere mit Fe₂O₃-Gehalten über 90, vorzugsweise über 95 Gew.-%
- als Al₂O₃-Komponente mindestens ein Rohstoffmaterial aus der folgenden Gruppe verwendet wird: Aluminiumoxid, insbesondere in Form von alpha oder gamma Alumina, insbesondere mit Al₂O₃-Gehalten über 98, vorzugsweise über 99 Gew.-%, oder calcinierter metallurgischer Bauxit.

9. Verfahren nach Anspruch 7 und/oder 8,
wobei
die Komponenten in einem Mahlaggregat gemischt und/oder zerkleinert werden, vorzugsweise bis ≤ 1 mm.

10. Verfahren nach einem oder mehreren der Ansprüche 7 bis 9,
wobei
die Mischungen bei Temperaturen zwischen 1.750 und 2.200, insbesondere zwischen 1.800 und 2.100 °C geschmolzen werden.

11. Verfahren nach einem oder mehreren der Ansprüche 7 bis 10,
wobei
die Mischungen vor dem Schmelzen z. B. durch Granulieren oder Pressen verdichtet werden.

12. Basisches, keramisch gebranntes oder ungebranntes Feuerfesterzeugnis, z. B. in Form eines Feuerfestformkörpers, insbesondere eines gepressten Feuerfestformkörpers, oder in Form einer ungeformten Feuerfestmasse aufweisend, insbesondere bestehend aus:
50 bis 95 Gew.-%, insbesondere 60 bis 90 Gew.-% mindestens eines körnigen, basischen, feuerfesten Werkstoffs, insbesondere Magnesia, insbesondere Schmelzmagnesia und/oder Sintermagnesia, mit Korngrößen z. B. zwischen 1 und 7, insbesondere zwischen 1 und 4 mm
0 bis 20 Gew.-%, insbesondere 2 bis 18 Gew.-% mindestens eines mehlförmigen, basischen, feuerfesten Werkstoffs, insbesondere Magnesia, insbesondere Schmelzmagnesia und/oder Sintermagnesia mit Korngrößen ≤ 1 mm, insbesondere ≤ 0,1 mm
5 bis 20, insbesondere 6 bis 15 Gew.-% mindestens eines körnigen Elastifizierergranulats gemäß einem der Ansprüche 1 bis 6 und/oder hergestellt gemäß einem der Ansprüche 7 bis 11 mit Korngrößen z. B. zwischen 0,5 und 4 mm, insbesondere zwischen 1 und 3 mm
0 bis 5 Gew.-%, insbesondere 1 bis 5 Gew.-% mindestens eines mehlförmigen Zusatzstoffes z. B. aus einem gemäß einem der Ansprüche 7 bis 11 hergestellten geschmolzenen Material mit Korngrößen ≤ 1 mm, insbesondere ≤ 0,1 mm
0 bis 5 Gew.-%, insbesondere 1 bis 2 Gew.-% mindestens eines für Feuerfesterzeugnisse üblicherweise verwendeten Bindemittels, insbesondere mindestens eines organischen Bindemittels wie Dextrin, Methylcellulose, Ligninsulfonat.

13. Verwendung eines Feuerfesterzeugnisses nach Anspruch 12 enthaltend ein Elastifizierergranulat nach einem oder mehreren der Ansprüche 1 bis 6, das hergestellt ist nach einem oder mehreren der Ansprüche 7 bis 11, als feuerseitige Auskleidung von großvolumigen, industriellen mit neutraler oder oxidierender Ofenatmosphäre betriebenen Ofenaggregaten, insbesondere für die Auskleidung von Zementdrehrohröfen.

## Claims

1. Granular, refractory mineral elasticizing granulate for refractory products, in particular for basic refractory products, minerally consisting of a mono-phased fused spinel mixed crystal or a multi-phased fused product of the ternary system MgO-Fe₂O₃-Al₂O₃ of the composition range
| | |
|---|---|
| MgO: | 12 to 19.5, in particular 15 to 17 wt.-%, |
| Remainder: | Fe₂O₃ and Al₂O₃ in a quantity ratio range of Fe₂O₃ to Al₂O₃ between 80 to 20 and 40 to 60 wt.-%, |
wherein starting from an MgO content between 12 and 19.5 wt.-%, the respective mixed crystals having an Fe₂O₃ and Al₂O₃ content in solid solution out of the limited ranges respectively indicated therefore, such that a total composition of 100% is obtained.

2. Elasticizing granulate according to claim 1,
comprising a bulk density of ≥ 3.5, in particular ≥ 3.6, preferably ≥ 3.7 g/cm³, quite particularly up to 3.8 g/cm³, measured according to DIN EN 993-18.

3. Elasticizing granulate according to claim 1 and/or 2,
comprising less than 15, in particular less than 10 wt-% of secondary phases.

4. Elasticizing granulate according to one or more of claims 1 to 3,
comprising grain compressive strengths between 30 MPa and 50 MPa, in particular between 35 MPa and 45 MPa, measured with reference to DIN EN 13005 (Appendix C).

5. Elasticizing granulate according to one or more of claims 1 to 4,
comprising a linear coefficient of expansion between 8.5 and 9.5, in particular between 8.8 and 9.2 • 10⁻⁶ K⁻¹.

6. Elasticizing granulate according to one or more of claims 1 to 5,
comprising grain sizes with commonly standard grain distributions, in particular Gaussian grain distributions, or with certain grain fractions between 0 and 6, in particular between 0 and 4 mm, preferably with the following grain distributions:
0.5-1.0 mm 30-40 wt.-%
1.0-2.0 mm 50-60 wt.-%.

7. Method for producing of a mono-phased elasticizing granulate according to one or more of claims 1 to 6,
wherein- at least one high purity, in particular powdered MgO component
- at least one high purity, in particular powdered Fe₂O₃-component
- at least one high purity, in particular powdered Al₂O₃-component
are mixed in certain quantities residing in the composition range relative to the oxide according to claim 1, and the mixture is fused in a neutral or reducing atmosphere, e.g. in an electric arc furnace, after cooling of the melt the fused product is crushed into a granulate and classified, and then preferably thereafter the classified or as yet still unclassified granulate, is converted via high-temperature oxidation into a mono-phased spinel product, e.g. in situ as an elasticizing constituent of a refractory product.

8. Method according to claim 7,
wherein
- as MgO component at least one raw material from the following group is used: fused magnesia, sintered magnesia, caustic magnesia, in particular with MgO contents greater than 98, preferably greater than 98 wt-%, or an iron-rich, alpine sintered magnesia
- as Fe₂O₃ component at least one raw material from the following group is used: magnetite, hematite, mill scale, in particular with Fe₂O₃-contents greater than 90, preferably greater than 95 wt-%
- as Al₂O₃ component at least one raw material from the following group is used: aluminum oxide, in particular in the form of alpha or gamma alumina, in particular with Al₂O₃ contents greater than 98, preferably greater than 99 wt-%, or calcined metallurgical bauxite.

9. Method according to claim 7 and/or 8,
wherein
the components are mixed and/or crushed in a grinding machine, preferably to ≤ 1 mm.

10. Method according to one or more of claims 7 to 9,
wherein
the mixtures are fused at temperatures between 1750 and 2200, in particular between 1800 and 2100 °C.

11. Method according to one or more of claims 7 to 10,
wherein
the mixtures are compacted before fusing, e.g. by granulation or compression.

12. Basic, ceramic fired or non-fired refractory product, e.g. in the form of a shaped refractory body, in particular a compressed shaped refractory body, or in the form of a non-shaped refractory mass, comprising or in particular consisting of:
50 to 95 wt-%, in particular 60 to 90 wt-% of at least one granular, basic, refractory material, in particular magnesia, in particular fused magnesia and/or sintered magnesia, with grain sizes e.g. between 1 and 7, in particular between 1 and 4 mm
0 to 20 wt-%, in particular 2 to 18 wt-% of at least one powdered, basic, refractory material, in particular magnesia, in particular fused magnesia and/or sintered magnesia with grain sizes ≤ 1 mm, in particular ≤ 0.1 mm
5 to 20, in particular 6 to 15 wt-% of at least one granular elasticizing granulate according to one of claims 1 to 6 and/or produced according to one of claims 7 to 11, with grain sizes e.g. between 0.5 and 4 mm, in particular between 1 and 3 mm
0 to 5 wt-%, in particular 1 to 5 wt-% of at least one powdered additive, e.g. from a fused material produced according to one of claims 7 to 11 with grain sizes ≤ 1 mm, in particular ≤ 0.1 mm
0 to 5 wt-%, in particular 1 to 2 wt-% of at least one binder normally used for refractory products, in particular at least one organic binder such as dextrin, methyl cellulose, lignin sulfonate.

13. Use of a refractory product according to claim 12, containing an elasticizing granulate according to one or more of claims 1 to 6, which is produced according to one or more of claims 7 to 11, as fire-side lining of large-volume, industrial furnace systems operated with a neutral or an oxidizing furnace atmosphere, in particular for the lining of cement rotary kilns.

## Revendications

1. Granulat d'élastification minéral réfractaire granulaire pour des produits réfractaires, en particulier pour des produits réfractaires basiques, constitué sur le plan minéral respectivement d'un cristal mixte de spinelle de fusion monophasique ou d'un produit de fusion polyphasique du système à trois composantes MgO-Fe₂O₃-Al₂O₃ de la plage de composition
MgO : 12 à 19,5, en particulier 15 à 17 % en poids
reste : Fe₂O₃ et Al₂O₃ dans la plage de rapport de quantités Fe₂O₃ par rapport à Al₂O₃ entre 80 pour 20 et 40 pour 60 % en poids,
dans lequel les cristaux mixtes respectifs contiennent, en partant d'une teneur en MgO entre 12 à 19,5 % en poids, respectivement une teneur en Fe₂O₃ et Al₂O₃ en solution solide dans les plages délimitées respectivement indiquées de telle manière qu'on obtient 100 % pour la composition totale.

2. Granulat d'élastification selon la revendication 1,
présentant une densité apparente ≥ 3,5, en particulier ≥ 3,6, de préférence ≥ 3,7 g/cm³, tout particulièrement jusqu'à 3,8 g/cm³, mesurée selon la norme DIN EN 993-18.

3. Granulat d'élastification selon la revendication 1 et/ou 2,
présentant moins de 15, en particulier moins de 10 % en poids de phases secondaires.

4. Granulat d'élastification selon l'une quelconque ou plusieurs des revendications 1 à 3, présentant des résistances à la compression des granulés entre 30 MPa et 50 MPa, en particulier entre 35 MPa et 45 MPa, mesurées en s'appuyant sur la norme DIN EN 13055 (annexe C).

5. Granulat d'élastification selon l'une quelconque ou plusieurs des revendications 1 à 4, présentant un coefficient de dilatation linéaire entre 8,5 et 9, 5, en particulier entre 8,8 et 9,2 • 10⁻⁶ K⁻¹.

6. Granulat d'élastification selon l'une quelconque ou plusieurs des revendications 1 à 5, présentant des granulométries avec des répartitions granulométriques normales courantes, en particulier des répartitions granulométriques gaussiennes, ou avec des fractions granulométriques définies entre 0 et 6, en particulier entre 0 et 4 mm, de préférence avec des répartitions granulométriques suivantes :
0,5 - 1,0 mm 30 - 40 % en poids
1,0 - 2,0 mm 50 - 60 % en poids.

7. Procédé de fabrication d'un granulat d'élastification monophasique selon l'une quelconque ou plusieurs des revendications 1 à 6,
dans lequel
- au moins une composante de MgO à pureté élevée, en particulier en poudre
- au moins une composante de Fe₂O₃ à pureté élevée, en particulier en poudre
- au moins une composante de Al₂O₃ à pureté élevée, en particulier en poudre
sont mélangées en des quantités définies, situées dans la plage de composition selon la revendication 1, se rapportant aux oxydes et le mélange est fondu dans une atmosphère neutre ou de réduction, par exemple dans un four à arc électrique, après le refroidissement de la matière fondue, le produit de fusion est fragmenté en un granulat et classé puis de préférence le granulat classé ou non encore classé d'une oxydation à température élevée est transformé en un produit de spinelle monophasique, par exemple *in situ* en tant que constituant d'élastification d'un produit réfractaire.

8. Procédé selon la revendication 7,
dans lequel
- est utilisé en tant que composante de MgO au moins un matériau brut issu du groupe suivant : magnésie fondue, magnésie de frittage, magnésie caustique, en particulier avec des teneurs en MgO supérieures à 96, de préférence supérieures à 98 % en poids, ou une magnésie alpine frittée riche en fer
- est utilisé en tant que composante de Fe₂O₃ au moins un matériau brut issu du groupe suivant : magnétite, hématite, calamine de laminage en particulier avec des teneurs en Fe₂O₃ supérieures à 90, de préférence supérieures à 95 % en poids
- est utilisé en tant que composante de Al₂O₃ au moins un matériau brut issu du groupe suivant : oxyde d'aluminium, en particulier sous la forme d'alumine-alpha ou -gamma, en particulier avec des teneurs en Al₂O₃ supérieures à 98, de préférence supérieures à 99 % en poids ou bauxite métallurgique calcinée.

9. Procédé selon la revendication 7 et/ou 8,
dans lequel
les composantes sont mélangées et/ou fragmentées dans un agrégat de meulage, de préférence jusqu'à ≤ 1 mm.

10. Procédé selon l'une quelconque ou plusieurs des revendications 7 à 9,
dans lequel
les mélanges sont fondus à des températures entre 1 750 et 2 200, en particulier entre 1 800 et 2 100 °C.

11. Procédé selon l'une quelconque ou plusieurs des revendications 7 à 10,
dans lequel
les mélanges sont compactés avant la fusion, par exemple par granulation ou compressage.

12. Produit réfractaire basique calciné ou non calciné sur le plan céramique, en particulier sous la forme d'un corps moulé réfractaire, en particulier d'un corps moulé réfractaire compressé, ou sous la forme d'une masse réfractaire non moulée, présentant, en particulier constitué de :
50 à 95 %, en particulier 60 à 90 % en poids d'au moins un matériau réfractaire basique granulaire, en particulier de magnésie, en particulier de magnésie fondue et/ou de magnésie frittée, avec des granulométries par exemple entre 1 et 7, en particulier entre 1 et 4 mm
0 à 20 % en poids, en particulier 2 à 18 % en poids, d'au moins un matériau réfractaire basique sous forme de poudre, en particulier de magnésie, en particulier de magnésie fondue et/ou de magnésie frittée avec des granulométries ≤ 1 mm, en particulier ≤ 0,1 mm
5 à 20, en particulier 6 à 15 % d'au moins un granulat d'élastification granulaire selon l'une quelconque des revendications 1 à 6 et/ou fabriqué selon l'une quelconque des revendications 7 à 11 avec des granulométries par exemple entre 0,5 et 4 mm, en particulier entre 1 et 3 mm
0 à 5 % en poids, en particulier 1 à 5 % en poids d'au moins un additif en poudre, par exemple d'un matériau fondu fabriqué selon l'une quelconque des revendications 7 à 11 avec des granulométries ≤ 1 mm, en particulier ≤ 0,1 mm
0 à 5 % en poids, en particulier 1 à 2 % en poids d'au moins un liant utilisé habituellement pour des produits réfractaires, en particulier d'au moins un liant organique, tel que de la dextrine, de la méthylcellulose, du sulfonate de lignine.

13. Utilisation d'un produit réfractaire selon la revendication 12, contenant un granulat d'élastification selon l'une quelconque ou plusieurs des revendications 1 à 6, qui est fabriqué selon l'une quelconque ou plusieurs des revendications 7 à 11, en tant que revêtement côté feu de groupes de four à grand volume, industriels fonctionnant avec une atmosphère de four neutre ou oxydante, en particulier pour le revêtement de fours rotatifs à ciment.
